# FASCICULE DE BREVET EUROPEEN

(11) **EP 0 488 882 B1**
(45) Date de publication et mention de la délivrance du brevet: **15.03.1995**
(21) Numéro de dépôt: 91403197.6
(22) Date de dépôt: 26.11.1991
(51) Int. Cl.: H02J 7/24, H02J 7/16

(54) **Dispositif régulateur de la tension de charge d'une batterie délivrée par un alternateur**
Regelungsvorrichtung für die, von einem Wechselstromgenerator abgegebene, Batteriespannung
Apparatus for regulating the charge voltage of a battery, delivered by an alternator

(30) Priorité: 27.11.1990 FR 9014790
(43) Date de publication de la demande: 03.06.1992
(73) Titulaire: VALEO EQUIPEMENTS ELECTRIQUES MOTEUR, 94000 Créteil (FR); SGS-THOMSON MICROELECTRONICS s.r.l., 20041 Agrate Brianza (Milano) (IT)
(72) Inventeur: Pierret, Jean-Marie, F-75012 Paris (FR); Canitrot, Didier, F-94510 La Queue en Brie (FR); Pennisi, Alessio, I-20149 Milano (IT); Marchio, Fabio, I-21013 Gallarate (IT)
(74) Mandataire: Ahner, Francis

(56) Documents cités:
- EP-A- 0 330 561
- FR-A- 2 419 603
- US-A- 4 360 773
- US-A- 4 636 706

## Description

La présente invention concerne d'une façon générale un dispositif régulateur pour la charge d'une batterie par un alternateur délivrant une tension redressée comportant une composante d'ondulation.

On connaît déjà dans la technique, par le document FR-A-2 629 957 au nom de la Demanderesse, un régulateur de tension qui permet d'une part d'effectuer une régulation sur la tension moyenne de sortie de l'alternateur, et qui d'autre part permet d'effectuer une régulation sur les crêtes supérieures d'ondulation d'alternateur incluses dans ce même signal.

La régulation sur valeur moyenne est en service normalement pour assurer la charge de la batterie sous une tension aussi régulière que possible et par exemple proche de 14,5 volts.

Dans le cas où les crêtes de la tension d'alternateur excèdent une tension de seuil prédéterminée, par exemple d'environ 19 volts, alors le régulateur sur valeurs de crête prend le pas sur le régulateur sur valeur moyenne pour abaisser le courant d'excitation et faire baisser l'amplitude de la composante d'ondulation de la tension. On évite ainsi le risque de destruction des diodes écrêteuses conventionnellement prévues dans l'étage redresseur en sortie d'alternateur. On se réfèrera à la demande de brevet précitée pour plus de détails quant à ces phénomènes.

Classiquement, un tel circuit de régulation prend son alimentation directement sur la tension de sortie d'alternateur redressée, à l'aide d'un étage de stabilisation approprié. La tension d'alimentation est conventionnellement stabilisée à environ 5 à 6 volts.

Ainsi un inconvénient de ce circuit connu réside en ce que, dans le cas où la tension d'alternateur redressée viendrait à prendre des valeurs de crêtes négatives excessivement basses, et notamment inférieures à la tension d'alimentation précitée, alors cette tension d'alimentation devient défaillante et le fonctionnement général du régulateur en est gravement perturbé.

La présente invention vise à pallier cet inconvénient et à proposer un dispositif du type mentionné en introduction qui soit capable également d'éviter ce type de défaillance.

Un objet plus particulier de l'invention est d'atteindre ce résultat d'une façon extrêmement simple et économique.

A cet effet, la présente invention concerne un dispositif régulateur pour la charge d'une batterie par un alternateur délivrant une tension redressée comportant une composante d'ondulation, du type comprenant un circuit de régulation sur la valeur moyenne de la tension d'alternateur redressée (B+) ainsi qu'un circuit de régulation sur la valeur de tension des crêtes positives de la composante d'ondulation, lesdits circuits de régulation étant alimentés par une tension stabilisée dérivée de ladite tension d'alternateur redressée, ainsi qu'un circuit de puissance pour la commande du courant d'excitation de l'alternateur, caractérisé en ce qu'il comprend en outre un circuit de régulation sur la valeur des crêtes négatives de la composante d'ondulation et également alimenté par ladite tension stabilisée et capable de provoquer une diminution dudit courant d'excitation lorsque la tension desdites crêtes négatives tombe en deçà d'un seuil déterminé.

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel :
la figure 1 est un schéma-bloc d'un dispositif de régulation de l'invention; et
la figure 2 est un schéma détaillé d'un circuit électrique possible pour un tel dispositif.

On notera préliminairement que, d'une figure à l'autre, des éléments ou parties identiques ou similaires ont été désignés par les mêmes signes de référence.

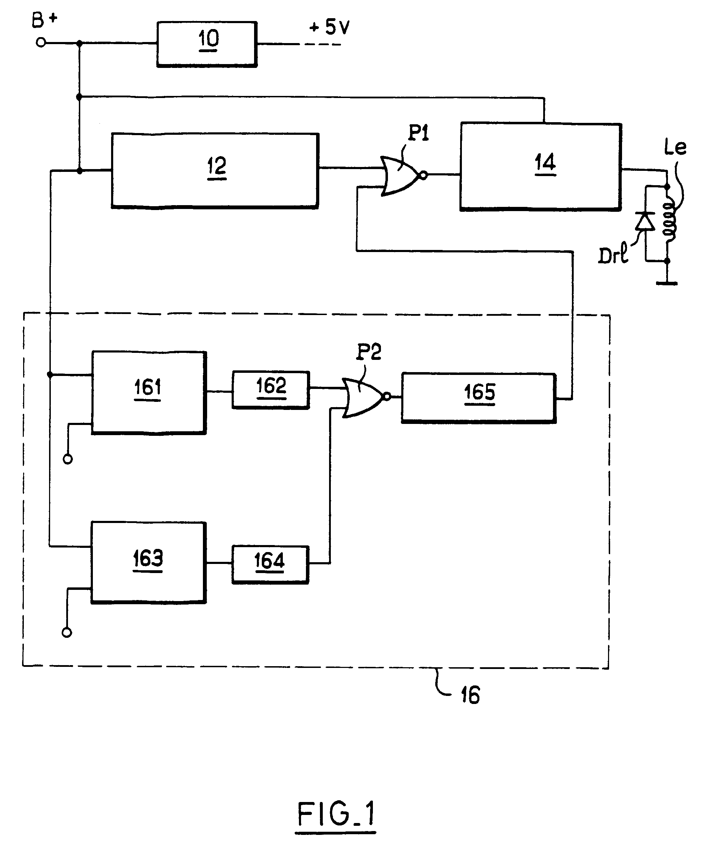

En référence tout d'abord à la figure 1, on a représenté dans son ensemble un dispositif de régulation de la tension d'alternateur redressée en vue de fournir une tension de charge correcte à la batterie du circuit électrique d'un véhicule automobile.

Ce circuit comprend tout d'abord un module d'alimentation 10 qui dérive de la tension de sortie redressée, notée B+, de l'alternateur, une tension stabilisée appropriée, par exemple de + 5 volts.

Un module de régulation sur valeur moyenne, désigné par la référence 12, reçoit sur une entrée la tension à réguler B+, et sa sortie est reliée à la première entrée d'une porte logique P1 (porte NON-OU), dont la sortie est reliée à l'entrée d'un étage de puissance 14 du dispositif. Cet étage est relié à l'enroulement d'inducteur, noté Le, de l'alternateur, en parallèle avec lequel est prévue classiquement une diode de roue libre Drl.

Les étages 12 et 14 sont de conception connue, comme décrit par exemple dans la demande de brevet français citée en introduction, et ne seront pas décrits plus en détail à ce stade.

Selon un aspect essentiel de la présente invention, un circuit de détection sur valeurs de crêtes, globalement désigné par la référence 16, comprend un étage 161 de détection de crêtes positives, recevant sur son entrée la tension B+ et délivrant en sortie des signaux impulsionnels de régulation, comme on le verra en détail plus loin. L'étage 161 est suivi d'un étage de filtrage 162 dont la sortie est reliée à une première entrée d'une porte logique P2 (porte NON-OU). Le circuit 16 comprend en outre un étage de détection de crêtes négatives noté 163, dont la sortie attaque un filtre 164. La sortie du filtre 164 est reliée à la seconde entrée de la porte P2.

La sortie de la porte P2 est reliée à l'entrée d'un circuit de temporisation 165, dont la sortie délivre des signaux logiques de commande qui sont appliqués à la seconde entrée de la porte P1.

L'ensemble des étages et modules de ce dispositif sont alimentés par le circuit d'alimentation 10, par des lignes non illustrées.

Le circuit 161 de détection des crêtes positives, le filtre 162 et la temporisation 165 sont, sur un plan purement fonctionnel, globalement équivalents au circuit de régulation sur crêtes positives tel que décrit en détail dans la demande de brevet précitée. On peut rappeler qu'un tel circuit a pour objet de signaler les crêtes positives de la tension B+ qui sont supérieures à une valeur de seuil donnée, notée Vsup et par exemple de 19 volts, le signal de détection (sous forme de signaux logiques hauts et bas) étant ensuite filtré de manière à ne prendre en compte que les crêtes de la composante d'ondulation de la tension d'alternateur redressée; en évitant en particulier de réagir aux impulsions parasites de faible énergie susceptibles d'apparaître dans la tension B+. Lorsque de telles crêtes positives sont détectées, le circuit de puissance est commandé, en l'espèce via P1 et P2, pour abaisser le courant d'excitation de l'alternateur et ainsi faire baisser à la fois la valeur moyenne du potentiel B+ et la tension de pic des crêtes positives.

Une telle détection a pour objet d'éviter de faire travailler dans des conditions excessivement difficiles les diodes écrêteuses qui font partie du circuit redresseur (non représenté) prévu entre la sortie de l'alternateur et le dispositif de régulation.

Selon la présente invention, le circuit de détection sur les crêtes négatives prévu en outre a pour objet de signaler les crêtes négatives qui viennent à descendre au delà d'une limite inférieure prédéterminée (seuil Vinf), en vue d'éviter de perturber la tension d'alimentation stabilisée du dispositif, comme décrit plus haut. De même que pour la détection de crêtes positives, le filtre 164 a pour objet d'éviter de signaler des franchissements du seuil Vinf dûs à des impulsions parasites de faible énergie dans la tension B+. Lorsque de telles crêtes négatives sont détectées, alors le circuit de puissance est commandé de manière à diminuer également le courant d'excitation en vue de faire décroître rapidement l'amplitude de la composante d'ondulation de la tension B+. Il est à noter ici que cette diminution d'amplitude est prépondérante par rapport à la diminution de la tension moyenne qui est également induite, de telle sorte que l'on assiste à une remontée suffisamment importante de la tension de pic des crêtes négatives.

De préférence, pour une tension d'alimentation stabilisée de 5 ou 6 volts, on fixe un seuil de tension inférieur pour les crêtes négatives à environ 8 volts, ce qui laisse une bonne marge de sécurité.

Le circuit de temporisation 165 du dispositif de régulation sur crêtes permet de mémoriser les signaux logiques de sortie de la porte P2 pendant une durée déterminée, par exemple d'environ 2 millisecondes. Un tel retard a pour objet, en mémorisant les signaux logiques de détection pendant une durée au moins égale à l'intervalle de temps qui sépare deux crêtes successives, d'éviter tout phénomène d'accrochage sur la fréquence de la composante d'ondulation de la tension B+, en délivrant à la porte P1 un créneau capable d'abaisser le courant d'excitation pendant une durée significative.

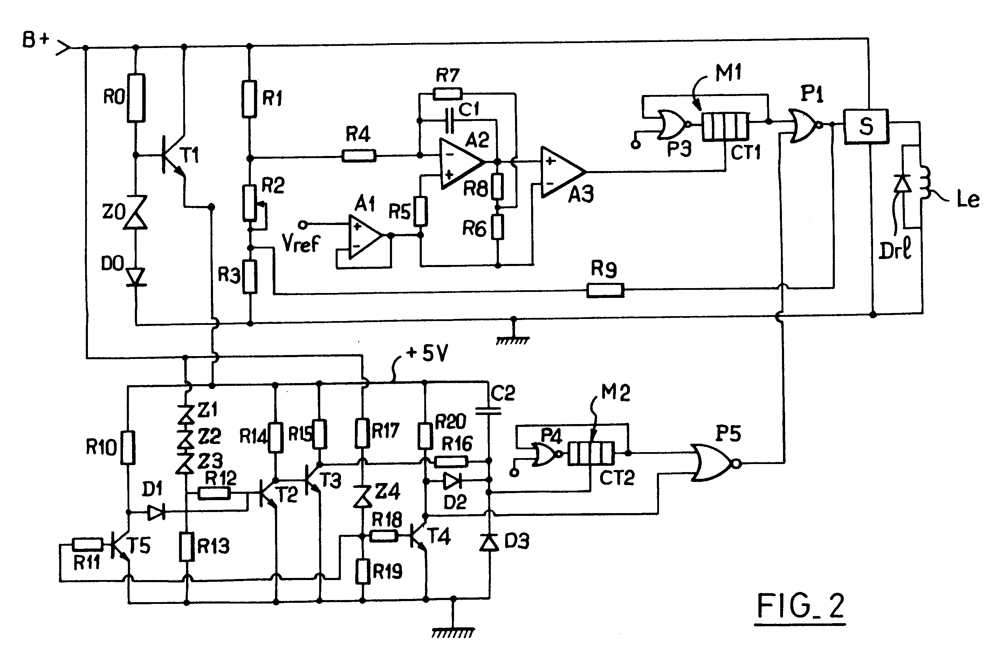

On va maintenant décrire en référence à la figure 2 un exemple de réalisation concret d'un circuit mettant en oeuvre les diverses fonctions exposées ci-dessus.

La tension d'alternateur redressée B+ est appliquée à une première borne d'un résistance R0 dont la seconde borne est reliée d'une part à la base d'un transistor T1 et d'autre part à la cathode d'une diode zéner Z0. L'anode de Z0 est reliée à la masse via une diode D0 montée dans le sens passant. Le collecteur de T1 est relié à la tension B+, tandis que son émetteur constitue une source de tension stabilisée dont la valeur est déterminée par la valeur de la diode zéner Z0 et est par exemple de 5 ou 6 volts.

Entre la tension B+ et la masse est prévu un pont diviseur constitué par trois résistances R1, R2, R3 en série, la résistance R2 pouvant être ajustable.

Le point commun entre R1 et R2 attaque via une résistance R4 l'entrée inverseuse d'un amplificateur différentiel A2. Une tension de référence Vref, fixant le seuil de la régulation sur valeur moyenne de B+, est appliquée à l'entrée non-inverseuse d'un amplificateur différentiel A1 monté en amplificateur tampon, dont la sortie est reliée à l'entrée non-inverseuse de A2 via une résistance R5. La sortie de A1 est également reliée à une première borne d'une résistance R6 dont la deuxième borne est reliée, d'une part, à l'entrée inverseuse de A2 via une résistance R7, et d'autre part à la sortie de A2 via une résistance R8. La sortie de A1 est également reliée à l'entrée inverseuse d'un troisième amplificateur différentiel A3 dont l'entrée non-inverseuse est attaquée directement par la sortie de A2. La sortie de A3 attaque un circuit de temporisation M1, articulé autour d'un circuit de comptage CT1 et d'une porte NON-OU P3 recevant un signal d'horloge élaboré par des moyens appropriés (non représentés). La sortie du circuit M1 est reliée à une première entrée de la porte NON-OU P1, dont la sortie est reliée à l'étage de puissance S du régulateur, schématiquement représenté car connu en soi, et construit autour d'un ou de plusieurs transistors de puissance appropriés. La sortie de cet étage 14 est reliée à une première borne de l'enroulement d'excitation Le de l'alternateur et à la cathode de la diode de roue libre Drl en parallèle, les deuxièmes bornes de l'enroulement et de la diode étant reliées à la masse. Enfin, une résistance R9 relie la sortie de P1 au point commun entre les résistances R2 et R3.

On va maintenant décrire en détail le circuit de détection sur crêtes. Il comprend un transistor NPN T5 dont le collecteur est relié à la ligne +5V par une résistance R10. La base de T5 est reliée à une première borne d'une résistance R11, et son émetteur est relié directement à la masse.

Le collecteur de T5 est en outre relié à l'anode d'une diode D1 dont la cathode est reliée à la base d'un transistor NPN T2. La base de T2 est également reliée via une résistance R12 au point commun entre un montage série de trois diodes zéner Z1, Z2, Z3 et une résistance R13. L'autre borne du montage série Z1, Z2, Z3 est reliée au potentiel B+, tandis que l'autre borne de R13 est reliée à la masse. Le collecteur de T2 est relié à la ligne +5V via une résistance R14, tandis que son émetteur est relié directement à la masse. Il est bien entendu qu'au montage série de plusieurs diodes zéner peut être substituée une diode zéner unique.

Le collecteur de T2 est également relié à la base d'un transistor NPN T3 dont l'émetteur est à la masse et dont une résistance de collecteur R15 connecte le collecteur à la ligne +5V.

Le collecteur de T3 est reliée à une première borne d'une résistance R16 dont la seconde borne est reliée à l'entrée d'un circuit de temporisation M2 décrit en détail plus loin.

Le potentiel B+ est appliqué en outre à une première borne d'une résistance R17 dont la seconde borne est reliée à la cathode d'une diode zéner Z4. L'anode de Z4 est reliée via une résistance R18 à la base d'un transistor NPN T4 et via une résistance R19 à la masse. Le point commun entre R18, R19 et Z4 est relié à la seconde borne de la résistance R11 précitée.

L'émetteur de T4 est à la masse, tandis qu'il est pourvu d'une résistance de collecteur R20 reliée à la ligne +5V. Le collecteur de T4 est en outre connecté à l'anode d'une diode D2 dont la cathode est reliée à l'entrée du circuit M2.

Enfin un condensateur C2 est monté entre la ligne +5V et l'entrée du circuit M2, tandis qu'une diode D3 est montée en inverse entre la masse et ladite entrée du circuit M2.

Le circuit M2 est articulé autour d'un circuit de comptage CT2 et d'une porte NON-OU P4 recevant un signal d'horloge. Au circuit M2 est associée une porte NON-OU P5 dont une première entrée est reliée à la sortie de CT2 et dont une seconde entrée est reliée au collecteur de T4. La sortie de P5, qui constitue la sortie du circuit de temporisation M2, est reliée à la deuxième entrée de la porte P1 précitée.

Le fonctionnement du circuit de régulation sur valeur moyenne va être brièvement décrit : l'entrée Vref et l'amplificateur A1 constituent le circuit de tension de référence. Le filtre actif utilisé pour obtenir la valeur moyenne de B+ est articulé autour de A2, tandis que A3 tient lieu de comparateur entre la valeur moyenne et la tension de référence Vref. Le circuit de temporisation M1 permet de donner aux créneaux appliqués à P1 une largeur suffisante pour influencer significativement le courant d'excitation, en évitant tout accrochage sur fréquence de la composante d'ondulation de B+. A titre d'exemple, on peut fixer une temporisation de l'ordre de 2 millisecondes.

On peut noter ici que la résistance R9 est une contre-réaction qui, en apportant sélectivement un décalage à la fraction du potentiel B+ obtenue par les résistances R1, R2 et R3 en fonction de l'état de sortie de M1, permet d'accroître la fréquence de régulation quant le débit de l'alternateur est proche de sa valeur maximale, afin de ne pas tomber dans des très basses fréquences auxquelles les fluctuations du potentiel B+ pourraient être perceptibles et gênantes.

On va maintenant décrire le fonctionnement général du circuit de détection sur valeurs de crêtes positives et négatives de l'invention.

Tout d'abord, le transistor T1 délivre aux lignes +5V l'alimentation positive stabilisée nécessaire au fonctionnement des circuits, comme expliqué plus haut.

Le détecteur de crêtes positives est ici articulé autour du transistor T2 et des trois diodes zéner Z1, Z2, Z3, tandis que le détecteur de crêtes négatives est articulé sur le transistor T4 et la diode zéner Z4.

La porte logique P2 décrite plus haut en référence à la figure 1 est constituée par le transistor T3 et la diode D2.

En outre, les deux filtres 162 et 164 décrits plus haut en référence à la figure 1 sont ici constitués par un filtre unique constitué par le condensateur C2 et les résistances R20 et R16. Une telle solution permet d'économiser un condensateur, pour ainsi abaisser le prix de revient. Le filtre est placé directement à l'entrée du circuit de temporisation M2.

Ce circuit de temporisation comporte comme on l'a indiqué un circuit de comptage CT2. Il a pour objet de mémoriser les signaux logiques fournis par les détecteurs de crêtes positives et négatives pendant une durée égale ou supérieure à celle qui sépare deux crêtes successives, de façon à délivrer un signal en créneau de durée suffisante pour agir efficacement sur le courant d'excitation, en évitant tout accrochage sur la fréquence de la composante d'ondulation de B+. Par exemple, la durée des créneaux délivrés est choisie de l'ordre de 2 millisecondes.

On va maintenant décrire en détail le fonctionnement de chacun des modules mentionnés ci-dessus.

### a) Détecteur de crêtes positives

Lorsqu'une crête positive du potentiel B+ dépasse un seuil donné déterminé par la somme des tensions caractéristiques de Z1, Z2, Z3, alors T2 est rendu passant, et T3 est bloqué. Il en résulte qu'une tension de +5V est appliquée à la première borne de R16 via R15. Le condensateur C2, initialement chargé, va donc se décharger à travers R16 pour faire croître progressivement la tension à l'entrée du circuit de temporisation M2 jusqu'à ce qu'elle atteigne un niveau logique haut. Il est à noter que les valeurs de la résistance R16 et du condensateur C2, constituant le filtre pour la détection de crêtes positives, sont conçues pour éviter que de courtes impulsions transitoires (parasites du potentiel B+) ne permettent à l'entrée de M2 d'atteindre le niveau logique haut.

Il est à noter que, dans cette situation, T4 est passant et n'agit pas sur l'entrée de M2, la diode D2 étant maintenue bloquée.

### b) Détecteur de crêtes négatives.

Lorsqu'une crête négative du potentiel B+ vient à se trouver en deçà d'un seuil bas défini par la tension caractéristique de Z4, alors T4 est bloqué, ce qui rend D2 passante. Il en résulte que le condensateur C2 va se décharger progressivement essentiellement à travers R20 et D2 (et dans une moindre mesure à travers R15 et R16, ceci pouvant être négligeable si l'on choisit R20 bien inférieure à R15+R16).

Il est à noter ici que, lors de l'apparition d'une crête négative en deçà du seuil fixé par Z4, le transistor T3 serait normalement passant, comme décrit plus haut, et tendrait donc à contrarier la décharge de C2 en le reliant via R16 à la masse. L'étage basé sur le transistor T5 a pour effet d'éviter ce phénomène. Plus précisément, T5 se bloque en même temps que T4, ce qui a pour effet de rendre T2 passant et T3 bloqué. On évite donc que, pendant la détection d'une crête négative, T3 ne contrarie la décharge de C2, pour permettre d'atteindre le niveau logique haut à l'entrée du circuit M2 à l'issue d'une durée déterminée pour l'essentiel par la constante de temps R20*C2.

A titre d'exemple non limitatif, les circuits de filtrage articulés autour du condensateur C2 peuvent induire les retards suivants:
- détection d'une crête positive : 7 »s;
- détection d'une crête négative : 2,5 »s;
- retour aux conditions normales : 7 »s.

On comprend que les signaux logiques fournis par les détecteurs sur crêtes positives et sur crêtes négatives, respectivement, sont combinés à la manière d'une porte logique OU (équivalant à la porte P2 de la figure 1), à l'aide de T3-R16 et T4-D2, à l'entrée du circuit de temporisation M2. Le signal est de niveau bas si les crêtes positives sont en deçà du seuil supérieur Vsup et simultanément si les crêtes négatives sont au delà du seuil inférieur Vinf, et il passe au niveau haut dès que l'un de ces seuils est franchi. Ceci a pour effet de positionner la sortie de CT2 au niveau bas pendant la durée de la temporisation. Il est à noter que la détection d'une crête négative bloque T4 pendant une durée négligeable par rapport à la durée de temporisation, de telle sorte qu'on peut considérer dans la pratique T4 comme étant toujours à l'état passant. Dans ces conditions, P5 agit uniquement comme inverseur des niveaux logiques de sortie de CT2.

On retrouve ainsi à la sortie du circuit de temporisation M2, comme expliqué plus haut, un créneau positif de durée appropriée, et ce signal est combiné avec le signal logique de régulation sur valeur moyenne dans la porte P1 afin d'abaisser le courant d'excitation, ce qui a pour conséquence de diminuer l'amplitude de la composante d'ondulation de la tension B+ et donc de ramener les crêtes positives ou les crêtes négatives, selon les cas, au-dessous ou au-dessus, respectivement, des seuils Vsup et Vinf pour ramener la situation à la normale.

Plus précisément, l'application d'un signal logique haut de durée prédéterminée sur la seconde entrée de la porte P1 a pour effet de forcer la sortie de cette porte au niveau bas, indépendamment de l'état de sa première entrée (qui détermine la régulation sur valeur moyenne), pour ainsi ouvrir le circuit de puissance dans lequel est inclus l'enroulement d'excitation de l'alternateur et abaisser le courant d'excitation.

On a vu plus haut que la porte P5 du circuit M2 était en premier lieu un circuit d'adaptation logique qui inverse les niveaux logiques engendrés entre la sortie du compteur CT2 et la seconde entrée de la porte P1. Un autre objet de cette porte P5 est d'annuler l'action du circuit de régulation sur valeurs de crêtes, qui bloquerait l'étage de puissance du régulateur si la batterie du véhicule venait à être déchargée. Plus précisément, lorsque la tension de batterie est en permanence inférieure au seuil bas de régulation sur crêtes, en l'espèce 8 volts, T4 est en permanence bloqué et un niveau logique haut est appliqué à la seconde entrée de P5. Ceci a pour effet de ne pas appliquer à la porte P1 et au circuit de puissance les signaux qui auraient normalement pour effet d'abaisser le courant d'excitation. On évite ainsi de perturber le fonctionnement du circuit lorsque la batterie est déchargée.

Bien entendu, la présente invention n'est nullement limitée à la forme de réalisation décrite ci-dessus et représentée sur les dessins, mais l'homme de l'art saura y apporter toute variante ou modification dans les limites des revendications annexées.

Il est à noter que le dispositif régulateur de la présente invention peut être mis en oeuvre indifféremment dans les régulateurs monofonction et dans les régulateurs multifonction, et l'homme de l'art saura bien entendu faire les adaptations nécessaires.

## Revendications

1. Dispositif régulateur pour la charge d'une batterie par un alternateur délivrant une tension redressée comportant une composante d'ondulation, du type comprenant un circuit de régulation sur la valeur moyenne (12) de la tension d'alternateur redressée (B+) ainsi qu'un circuit de régulation sur la valeur de tension des crêtes positives (161) de la composante d'ondulation, lesdits circuits de régulation étant alimentés par une tension stabilisée dérivée de ladite tension d'alternateur redressée, ainsi qu'un circuit de puissance (14) pour la commande du courant d'excitation de l'alternateur, caractérisé en ce qu'il comprend en outre un circuit de régulation sur la valeur des crêtes négatives (163, 164) de la composante d'ondulation et également alimenté par ladite tension stabilisée et capable de provoquer une diminution dudit courant d'excitation lorsque la tension desdites crêtes négatives tombe en deçà d'un seuil déterminé.

2. Dispositif selon la revendication 1, caractérisé en ce que le circuit de régulation sur la valeur des crêtes négatives comprend un circuit de détection (163) et un filtre (164; C2, R16, R20).

3. Dispositif selon la revendication 2, caractérisé en ce que le filtre (C2, R16, R20) est commun au circuit de régulation sur la valeur des crêtes négatives et au circuit de régulation sur la valeur des crêtes positives.

4. Dispositif selon l'une des revendications 1 à 3, caractérisé en ce qu'il comprend à la sortie du circuit de régulation sur la valeur des crêtes négatives un circuit de temporisation (M2; CT2, P4).

5. Dispositif selon la revendication 4, caractérisé en ce qu'il comprend un moyen (P2; T3, T4, D2) pour combiner des signaux logiques délivrés par le circuit de régulation sur la valeur des crêtes négatives et le circuit de régulation sur la valeur des crêtes positives en amont dudit circuit de temporisation (M2).

6. Dispositif selon l'une des revendications 1 à 5, caractérisé en ce que le circuit de régulation sur les crêtes positives et le circuit de régulation sur les crêtes négatives comprennent chacun un étage de détection (161, 163) comprenant un transistor (T2; T4) dont la base reçoit la tension d'alternateur redressée via au moins une diode zéner (Z1-Z3; Z4).

7. Dispositif selon la revendication 5, caractérisé en ce qu'il comprend une porte logique (P1) combinant des signaux logiques de régulation sur valeur moyenne et les signaux logiques combinés de régulation sur valeurs de crêtes positives et négatives.

8. Dispositif selon l'une des revendications 4 et 5, caractérisé en ce que le circuit de temporisation (M2) comprend un circuit de comptage (CT2).

9. Dispositif selon l'une des revendications précédentes, caractérisé en ce que le circuit de régulation sur la valeur des crêtes négatives comprend un moyen (P5) pour bloquer son action lorsque la tension d'alternateur redressée est située de façon permanente en deçà dudit seuil déterminé pour cause de batterie déchargée.

10. Dispositif selon la revendication 9, rattachée à la revendication 4, caractérisé en ce que ledit moyen de blocage comprend une porte (P5) dont une première entrée reçoit un signal de détection en sortie du circuit de temporisation (M2) et dont une seconde entrée reçoit un signal de détection en entrée du circuit de temporisation.

## Patentansprüche

1. Regelungsvorrichtung für die Ladung einer Batterie durch einen Wechselstromgenerator, der eine gleichgerichtete Spannung mit einer Wellenkomponente abgibt, in der Ausführung mit einer Regelschaltung (12) für die Regelung nach dem Mittelwert der gleichgerichteten Generatorspannung (B+) sowie mit einer Regelschaltung (161) für die Regelung nach dem Spannungswert der positiven Spitzen der Wellenkomponente, wobei die genannten Regelschaltungen durch eine von der gleichgerichteten Generatorspannung abgeleitete stabilisierte Spannung gespeist werden, sowie mit einer Leistungsschaltung (14) für die Steuerung des Erregerstroms des Wechselstromgenerators, **dadurch gekennzeichnet**, daß sie außerdem eine Regelschaltung (163, 164) für die Regelung nach dem Wert der negativen Spitzen der Wellenkomponente umfaßt, die ebenfalls durch die stabilisierte Spannung gespeist wird und in der Lage ist, eine Verringerung des Erregerstroms zu bewirken, wenn die Spannung der negativen Spitzen unter einen bestimmten Schwellenwert absinkt.

2. Vorrichtung nach Anspruch 1 , **dadurch gekennzeichnet**, daß die Regelschaltung nach dem Wert der negativen Spitzen eine Erfassungsschaltung (163) und ein Filter (164; C2, R16, R20) umfaßt.

3. Vorrichtung nach Anspruch 2 , **dadurch gekennzeichnet**, daß das Filter (C2, R16, R20) der Regelschaltung nach dem Wert der negativen Spitzen und der Regelschaltung nach dem Wert der positiven Spitzen gemeinsam ist.

4. Vorrichtung nach einem der Ansprüche 1 bis 3 , **dadurch gekennzeichnet**, daß sie am Ausgang der Regelschaltung nach dem Wert der negativen Spitzen eine Verzögerungsschaltung (M2; CT2, P4) umfaßt.

5. Vorrichtung nach Anspruch 4 , **dadurch gekennzeichnet**, daß sie ein Mittel (P2; T3, T4, D2) umfaßt, um logische Signale, die von der Regelschaltung nach dem Wert der negativen Spitzen und der Regelschaltung nach dem Wert der positiven Spitzen geliefert werden, vor der Verzögerungsschaltung (M2) zu verknüpfen.

6. Vorrichtung nach einem der Ansprüche 1 bis 5 , **dadurch gekennzeichnet**, daß die Regelschaltung nach den positiven Spitzen und die Regelschaltung nach den negativen Spitzen jeweils eine Erfassungsstufe (161, 163) enthalten, die einen Transistor (T2; T4) umfaßt, dessen Basis über mindestens eine Zenerdiode (Z1-Z3; Z4) die gleichgerichtete Generatorspannung empfängt.

7. Vorrichtung nach Anspruch 5 , **dadurch gekennzeichnet**, daß sie ein Logikgatter (P1) enthält, das die logischen Signale zur Regelung nach dem Mittelwert und die verknüpften logischen Signale zur Regelung nach den Wert der positiven und negativen Spitzen verknüpft.

8. Vorrichtung nach einem der Ansprüche 4 und 5 , **dadurch gekennzeichnet**, daß die Verzögerungsschaltung (M2) eine Zählschaltung (CT2) umfaßt.

9. Vorrichtung nach einem der vorangehenden Ansprüche, **dadurch gekennzeichnet**, daß die Regelschaltung nach dem Wert der negativen Spitzen ein Mittel (P5) umfaßt, um ihre Wirkung zu sperren, wenn die gleichgerichtete Generatorspannung aufgrund der Entladung der Batterie ständig diesseits eines bestimmten Schwellenwerts liegt.

10. Vorrichtung nach Anspruch 9 in Verbindung mit Anspruch 4 , **dadurch gekennzeichnet**, daß das genannte Sperrmittel ein Gatter (P5) umfaßt, dessen erster Eingang ein Erfassungssignal am Ausgang der Verzögerungsschaltung (M2) empfängt und dessen zweiter Eingang ein Erfassungssignal am Eingang der Verzögerungsschaltung empfängt.

## Claims

1. A regulator device for charging a battery by means of an alternator that delivers a rectified voltage including a ripple component; the device being of the type comprising a regulator circuit (12) acting on the mean value of the rectified alternator voltage (B+) and a regulator circuit (161) acting on the voltages of the positive peaks of the ripple component, said regulator circuits being powered by a stabilized voltage derived from said rectified alternator voltage, the device further comprising power stage (14) for controlling the excitation current of the alternator, the device being characterized in that it further includes a regulator circuit (163, 164) acting on the values of the negative peaks of the ripple component and also powered by said stabilized voltage, and capable of causing said excitation current to be reduced whenever the voltage of said negative peaks falls below a given threshold.

2. A device according to claim 1, characterized in that the regulator circuit acting on the values of the negative peaks comprises a detection circuit (163) and a filter (164; C2, R16, R20).

3. A device according to claim 2, characterized in that the filter (C2, R16, R20) is common to the regulation circuit acting on the values of the negative peaks and to the regulation circuit acting on the values of the positive peaks.

4. A device according to any one of claims 1 to 3, characterized in that it includes a time delay circuit (M2; CT2, P4) at the output from the regulation circuit acting on the values of the negative peaks.

5. A device according to claim 4, characterized in that it includes means (P2; T3, T4, D2) for combining the logic signals delivered by the regulator circuit acting on the values of the negative peaks and by the regulator circuit acting on the values of the positive peaks, upstream from said time delay circuit (M2).

6. A device according to any one of claims 1 to 5, characterized in that the regulator circuit acting on the positive peaks and the regulator circuit acting on the negative peaks both comprise a connection stage (161, 163) including a transistor (T2; T4) whose base receives the rectified alternator voltage via at least one zener diode (Z1-Z3; Z4).

7. A device according to claim 5, characterized in that it includes a logic gate (P1) combining the regulation logic signals acting on the mean value and the combined regulation logic signals acting on the positive and the negative peak values.

8. A device according to claim 4 or 5, characterized in that the time delay circuit (M2) includes a counter circuit (CT2).

9. A device according to any preceding claim, characterized in that the regulator circuit acting on the negative peak values includes inhibit means (P5) for inhibiting its action when the rectified alternator voltage lies permanently below said given threshold because the battery is discharged.

10. A device according to claim 9 as dependent on claim 4, characterized in that said inhibit means comprises a gate (P5) having a first input receiving the detection signal at the output from the time delay circuit (M2) and having a second input receiving a detection signal at the input of the time delay circuit.
